(19) Europäisches Patentamt
European Patent Office
Office européen des brevets

(11) **EP 3 708 569 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **19161860.2**

(22) Anmeldetag: **11.03.2019**

(51) Internationale Patentklassifikation (IPC):
**C07F 7/18** (2006.01)   **C07F 7/21** (2006.01)
**C08G 77/20** (2006.01)   **C09J 183/08** (2006.01)
**C08G 77/26** (2006.01)

(52) Gemeinsame Patentklassifikation (CPC):
**C07F 7/21; C07F 7/1804; C08G 77/20;
C08G 77/26; C09J 183/08**

(54) **EIN VOC FREIES, WÄSSRIGES UND LAGERSTABILES N-VINYLBENZYLAMINALKYL-FUNKTIONELLES SILOXANOL UND VERFAHREN ZU DESSEN HERSTELLUNG**

A VOC FREE AQUEOUS AND SHELF-STABLE N-VINYLBENZYLAMINALKYL-FUNCTIONAL SILOXANOL AND METHOD FOR PRODUCING THE SAME

SILOXANYLE FONCTIONNEL N-VINYL-BENZYL-AMINO-ALKYLE SANS COV, AQUEUX ET STABLE AU STOCKAGE ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.09.2020 Patentblatt 2020/38**

(73) Patentinhaber: **Evonik Operations GmbH
45128 Essen (DE)**

(72) Erfinder:
• **WASSMER, Christian
79688 Hausen (DE)**
• **BIGGS, Tim
79618 Rheinfelden (DE)**
• **ASAL, Julian
79618 Rheinfelden (DE)**

(74) Vertreter: **Evonik Patent Association
c/o Evonik Industries AG
IP Management
Bau 1042A/PB 15
Paul-Baumann-Straße 1
45772 Marl (DE)**

(56) Entgegenhaltungen:
**WO-A1-2005/118599**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine wässrige lagerstabile und vorzugsweise farblose Zusammensetzung umfassend N-Vinylbenzylaminalkyl-funktionelle Siloxanole, die abgeleitet sind aus einer Umsetzung von Hydrolyseprodukten und optional Kondensationsprodukten von Hydrolyseprodukten mindestens eines Aminoalkyl-funktionellen Alkoxysilans oder eines Gemisches von Aminoalkyl-funktionellen Alkoxysilanen mit Vinylbenzylhalogenid, umfassend größer gleich 1 Gew.-% N-Vinylbenzylaminalkyl-funktionelle Siloxanole und/oder Salze der protonierten N-Vinylbenzylaminalkyl-funktionellen Siloxanole sowie Wasser, wobei die Gesamtzusammensetzung 100 Gew.-% hat und einem pH-Wert von 2 bis 3,5 aufweist. Ferner wird ein Verfahren zur Herstellung dieser Zusammensetzung offenbart.

Es ist lange bekannt Hydrochloride funktionalisierter Aminosilane, z. B. von 3-(N-vinylbenzyl-2-aminoethyl)aminopropyltrimethoxysilan als methanolische Lösung, herzustellen und beispielsweise als Haftvermittler zu verwenden (US 4,902,556, EP 353 766, US 4,849,294, EP 338 128, US 4,499,152, US 4,382,991 , US 4,330,444, DE 28 02 242, JP 01-259369, EP 176 062, EP 590 270, WO 2005/118599, um nur einige zu nennen).

Für viele Applikationen werden jedoch zunehmend VOC freie Produkte gefordert. Das Umsetzungsprodukt aus Vinylbenzylchlorid (VBC) mit N-(2-Aminoethyl)-3-aminopropyl-trimethoxysilan (DAMO) zur Herstellung eines 3-(N-Vinylbenzyl-2-aminoethyl)-aminopropyl-trimethoxysilan-hydrochlorids erhält man in der technischen Praxis nur in Lösemittel gelöst. Als Lösemittel wird dabei oft Methanol eingesetzt. Diese methanolische Lösung wird beispielsweise als Haftungsvermittler zwischen Glasfaser und Epoxidharz (PCB, Printed Circuit Board Anwendung) eingesetzt. Die Applikation auf der Glasfaser erfolgt meistens als wässrige Schlichte. Das Umsetzungsprodukt in Methanol wird dabei zuvor in Wasser hydrolysiert, wobei die Stabilität dieses Hydrolysates max. 48h beträgt.

Daher sieht die übliche Anwendungsempfehlung für 3-(N-vinylbenzyl-2-aminoethyl)aminopropyl-trimethoxysilan lediglich die Herstellung von wässrigen Zusammensetzungen mit einem Gehalt von maximal 0,1 bis 0,5 Gew.-% an 3-(N-vinylbenzyl-2-aminoethyl)aminopropyltrimethoxysilan vor, da sich andernfalls innerhalb von wenigen Tagen eine mehrphasige Zusammensetzung mit einer öligen Phasen als Bodensetz ausbildet. Die Zusammensetzung enthält zudem den Hydrolysealkohol.

Es bestand daher die Aufgabe eine lagerstabile, VOC freie wässrige Zusammensetzung des N-Vinylbenzylaminalkyl-funktionelle Silans bereitzustellen, wobei die Zusammensetzung zudem über einen längeren Zeitraum keine mehrphasigen Gemische ausbilden soll und sich vorzugsweise die Viskosität als Indikator für die Stabilität nicht wesentlich über diesen Zeitraum ändern soll. Des Weiteren bestand die Aufgabe ein Verfahren zur Herstellung dieser Zusammensetzungen bereitzustellen. Dabei soll die Stabilität einer Zusammensetzung in der wässrigen Verdünnung (als Anwendungsschlichte) mehr als 48h betragen.

Gelöst werden die Aufgaben durch eine Zusammensetzung nach Anspruch 1 sowie das Verfahren nach Anspruch 10, weitere bevorzugte Ausgestaltungen sind in den Unteransprüchen und in der Beschreibung erläutert.

Offenbart ist, dass man ein lagerstabiles (mindestens 6 Monate bei Raumtemperatur) wässriges VOC (volatile organic compounds) freies Umsetzungsprodukt von N-(2-Aminoethyl)-3-aminopropyltrimethoxysilan und Vinylbenzylchlorid erhält, wenn das eingesetzte N-(2-Aminoethyl)-3-aminopropyltrimethoxysilan vor der Umsetzung mit Vinylbenzylchlorid mit Wasser hydrolysiert und anschließend nach der Neutralisation und der Einstellung eines pH-Wertes bis 4, der Alkohol, hier das Methanol, destillativ abgetrennt wird. Die Destillation erflogt vorzugsweise im Vakuum bei einer Sumpftemperatur kleiner 60 °C. Auf diese Weise kann vorteilhaft eine Zusammensetzung, insbesondere eine Lösung bereitgestellt werden, die einen Alkohol-Gehalt, insbesondere einen Methanol-Gehalt, von <1,0 Gew-%, und eine Lagerstabilität von größer 6 Monaten bei Raumtemperatur (20 bis 23 °C) aufweist. Auch die Stabilität als wässrige Verdünnung (Anwendung als Schlichte) ist größer als 1 Monat bei Raumtemperatur (20 bis 23 °C). Unter einer Lösung wird eine homogene Mischung von Wasser und den erfindungsgemäßen Amino-funktionellen Siloxanolen verstanden, die als nur eine einzige Phase vorliegen.

Somit ist Gegenstand der vorliegenden Erfindung eine Zusammensetzung umfassend N-Vinylbenzylaminalkyl-funktionelle Siloxanole und optional Salze der protonierten N-Vinylbenzylaminalkyl-funktionellen Siloxanole, insbesondere eine 3-(N-Vinylbenzyl-2-aminoethyl)-aminopropyl-trimethoxysiloxanhydrochlorid und Wasser enthaltende Zusammensetzung - nachfolgend auch kurz erfindungsgemäße Lösung genannt - sowie das Verfahren zu deren Herstellung und deren Verwendung .

Gegenstand der Erfindung ist eine wässrige Zusammensetzung umfassend N-Vinylbenzylaminalkyl-funktionelle Siloxanole und optional Salze der protonierten N-Vinylbenzylaminalkyl-funktionellen Siloxanole und optional Gemische dieser, die abgeleitet sind aus einer Umsetzung

- von Hydrolyseprodukten und optional Kondensationsprodukten von Hydrolyseprodukten mindestens eines Aminoalkyl-funktionellen Alkoxysilans oder eines Gemisches von Aminoalkyl-funktionellen Alkoxysilanen mit
- Vinylbenzylhalogenid, wobei die Zusammensetzung umfasst
- 1 bis 70 Gew.-% N-Vinylbenzylaminalkyl-funktionelle Siloxanole und optional Salze der protonierten N-Vinylbenzylaminalkyl-funktionellen Siloxanole,

- 30 bis 99 Gew.-% Wasser in Bezug auf die Gesamtzusammensetzung von 100 Gew.-% mit, einem pH-Wert von 2 bis 3,5

wobei die Zusammensetzung einen Alkohol-Gehalt, insbesondere einen Methanol-Gehalt, von <1,0 Gew-%, und eine Lagerstabilität von größer 6 Monaten bei Raumtemperatur aufweist, wobei Raumtemperatur einen Bereich von 20 bis 23 °C umfasst.

Dabei ist es besonders bevorzugt, wenn der Gehalt der N-Vinylbenzylaminalkyl-funktionellen Siloxanole und/oder der Salze der protonierten N-Vinylbenzylaminalkyl-funktionellen Siloxanole von 10 bis 65 Gew.-%, bevorzugt von 20 bis 60 Gew.-% und, besonders bevorzugt von 30 bis 60 Gew.-% in der wässrigen Zusammensetzung beträgt, insbesondere mit 35 bis 90 Gew.-% Wasser, bevorzugt mit 40 bis 80 Gew.-% Wasser, besonders bevorzugt mit 40 bis 70 Gew.-% Wasser.

Offenbart ist eine wässrige Zusammensetzung vorzugsweise als wässrige Lösung und mit einem pH-Wert von 2 bis 3,75 vor. Ganz besonders bevorzugte Zusammensetzungen weisen einen Gehalt von 40 bis 65 Gew.-% an N-Vinylbenzylaminalkyl-funktionellen Siloxanole und/oder der Salze der protonierten N-Vinylbenzylaminalkyl-funktionellen Siloxanole und Gemischen dieser auf, bevorzugt beträgt der Gehalt 35 bis 50 Gew.-%, besonders bevorzugt 35 bis 45 Gew.-%, insbesondere mit 50 bis 65 Gew.-% Wasser, bevorzugt mit 55 bis 65 Gew.-% Wasser, wobei der offenbarte pH-Wert der wässrigen Zusammensetzung vorzugsweise 2,7 bis 4 beträgt, besonders bevorzugt 2,7 bis 3,75, vorzugsweise 2,85 bis 3,5. Alternativ bevorzugt pH-Wert von 3 plus/minus 0,5, plus/minus 0,25. Dabei kann der Gehalt der sauren Zusammensetzung der N-Vinylbenzylaminalkyl-funktionellen Siloxanole und/oder der Salze der protonierten N-Vinylbenzylaminalkyl-funktionellen Siloxanole über die Ermittlung des Feststoffgehaltes ermittelt werden. Ganz besonders bevorzugt ist ein Gehalt von größer gleich 25 bis 65 Gew.-% N-Vinylbenzylaminalkyl-funktionellen Siloxanole und/oder der Salze der protonierten N-Vinylbenzylaminalkyl-funktionellen Siloxanole, wobei der Gehalt an Waser kleiner gleich 75 bis 35 Gew.-% in der Gesamtzusammensetzung von 100 Gew.% beträgt.

Gegenstand der Erfindung ist eine Zusammensetzung mit pH-Wert von 2 bis 3,5. Gleichfalls kann die Zusammensetzung einen Gehalt an Säure oder deren dissoziierte Ionen zur Ausbildung der protonierten N-Vinylbenzylaminalkyl-funktionellen Siloxanole mit Anion ausgewählt aus anorganischer oder organischer Säure oder Gemischen dieser enthalten. Bevorzugt wird die Säure in Bezug auf die Stickstoff-Atome im Silan oder Siloxan in Verhältnis von 0,5 mol bis 1,0 mol zugesetzt.

Nach einer Ausführungsform ist Gegenstand der Zusammensetzung eine Zusammensetzung umfassend je Mol Stickstoff-Atome 0,2 bis 1,5 Mol Protonen (Hydron) in der Gesamtzusammensetzung, insbesondere 0,45 bis 1, 15 Mol Protonen (Hydron). Ferner kann die Zusammensetzung umfassen je Mol Stickstoff-Atome der Siloxanole 0,2 bis 1,5 Mol Protonen (Hydron) und 0,2 bis 1,5 Mol Anionen, bevorzugt 0,45 bis 1,15 Mol Anionen, insbesondere der Halogenide und optional der Säure, in der Gesamtzusammensetzung enthalten sind.

Grundsätzlich geeignet sind wasserlösliche Säuren bspw. die zu mehr als 5 g/100 g Waser löslich sind. Gleichfalls geeignet sind Schwefelsäure, Alkylcarbonsäuren mit 1 bis 5 C-Atomen, Milchsäure, Fruchtsäuren, Fettsäuren, Acrylsäure, Methacrylsäure und/oder olefinische Säuren.

Wesentlich zur Herstellung lagerstabiler Lösungen ist die Reihenfolge, in der die Einstellung des pH-Wertes und die Entfernung des Alkohols und des Hydrolysealkohols erfolgt. Erfindungsgemäß wird nach der Umsetzung der Hydrolyseprodukte und optional Kondensationsprodukte der Aminoalkyl-funktionellen Alkoxysilane oder deren Gemischen mit Vinylbenzylhalogenid, zunächst der pH-Wert neutral und vorzugsweise sauer durch Zugabe einer Säure oder eines Gemisches von Säuren eingestellt. Anschließend kann die resultierende Zusammensetzung mit Wasser verdünnt werden, vorzugsweise wird die 1 bis 100-fache Menge Wasser in Bezug auf die eingesetzte Menge Wasser zur Hydrolyse zugesetzt, bevorzugt wird die 10 bis 30-fache Menge an Wasser zugesetzt, und der Alkohol und Hydrolysealkohol bei vermindertem Druck (Vakuum), vorzugsweise bei kleiner 300 mbar(abs.), insbesondere bei 100 bis 250 mbar (abs.) bei einer Sumpftemperatur von 20 bis 65 °C, insbesondere 35 bis 60 °C, aus der Zusammensetzung abdestilliert, optional wird weiteres Wasser, vorzugsweise die 0,5 bis 100-fache Menge in Bezug auf die zur Hydrolyse verwendete Menge Wasser, bevorzugt die 0,5 bis 10-fache Menge Wasser, zugegeben und die wässrige Zusammensetzung erhalten.

Es hat sich gezeigt, dass die lagerstabilen, wässrigen Lösungen eine definierte Viskosität aufgrund eines definierten Molekulargewichtes der erhaltenen N-Vinylbenzylaminalkyl-funktionellen Siloxanole und/oder der Salze der protonierten N-Vinylbenzylaminalkyl-funktionellen Siloxanole und optional der Gemische dieser aufweisen. Ohne an die Theorie gebunden zu sein, wird angenommen, dass die erfindungsgemäß mit Vinylbenzyl-funktionalisierten Siloxanole mizellenartige Strukturen ausbilden und so die Lagerstabilität erhöhen.

Die Bestimmung der Molekulargewichte kann mittels des Fachmanns geläufiger Methoden, wie der GPC Bestimmung zur Ermittlung des Molekulargewichtes von oligomeren oder polymeren Strukturen erfolgen. Bei der GPC Bestimmung sind verschiedene Methoden bekannt. So wird bei der Dreifachdetektion der arithmetische Mittelwert (Mn = Number Average Molecular Weight), der nach dem Gewicht gemittelter Wert (Mw = Weight Average Molecular Weight) oder ein Mittelwert, der das Gewicht der Moleküle überproportional berücksichtigt (Mz =Zentrifugenmittelwert) ermittelt. Gleichfalls kann das Molekulargewicht der Peakspitze angegeben werden (Mp = Peak Molecular Weight).

Gewichtsmittel des Molekulargewichts (Mw)

$$M_w = \frac{\sum n_i M_i^2}{\sum n_i M_i}$$

Und Zahlenmittel des Molekulargewichts (Mn)

$$M_n = \frac{\sum n_i M_i}{\sum n_i}$$

jeweils mit:

$n_i$ = Stoffmenge [Masse] des i-mers
$M_i$ = Molmasse des i-mers

Details zur Definition für Gewichtsmittel und Zahlenmittel, die dem Fachmann an sich bekannt sind, kann der Leser aber auch u. a. dem Internet unter http://de.wikipedia.org/wiki/Molmassenverteilung oder einem Standardwerk der Mathematik entnehmen.

Bevorzugt ist eine wässrige Zusammensetzung in der das Gewichtsmittel des Molekulargewichts (Mw) der N-Vinylbenzylaminalkyl-funktionellen Siloxanole und/oder der Salze der protonierten N-Vinylbenzylaminalkyl-funktionellen Siloxanole größer gleich 1.000 g/mol und/oder das Zahlenmittel des Molekulargewichts (Mn) der N-Vinylbenzylaminalkyl-funktionellen Siloxanole und/oder der Salze der protonierten N-Vinylbenzylaminalkyl-funktionellen Siloxanole größer gleich 700 g/mol sind, insbesondere ist das Gewichtsmittel des Molekulargewichts (Mw) größer gleich 10.000 g/mol und/oder das Zahlenmittel des Molekulargewichts (Mn) größer gleich 800 g/mol, bevorzugt größer gleich 1.500 g/mol.

Gemäß einer Alternative der Erfindung ist es bevorzugt, wenn die Zusammensetzung N-Vinylbenzylaminalkyl-funktionellen Siloxanole und/oder der Salze der protonierten N-Vinylbenzylaminalkyl-funktionellen Siloxanole oder Gemische dieser enthält, deren Gewichtsmittel des Molekulargewichts (Mw) größer gleich 1000 g/mol und deren Zahlenmittel des Molekulargewichts (Mn) größer gleich 700 g/mol sind, wobei die Polydispersität als Quotient aus Mw/Mn bei 1,0 bis 10 liegt, vorzugsweise bei 1,05 bis 6, in ausgewählten Alternativen bei 1,05 bis 2,5 oder bei 3,5 bis 6.

Zusätzlich bevorzugt sind Zusammensetzungen mit N-Vinylbenzylaminalkyl-funktionellen Siloxanole und/oder der Salze der protonierten N-Vinylbenzylaminalkyl-funktionellen Siloxanole oder Gemische dieser in denen das Gewichtsmittel des Molekulargewichts (Mw) größer gleich 10.000 g/mol und das Zahlenmittel des Molekulargewichts (Mn) größer gleich 800 g/mol sind, wobei die Polydispersität als Quotient aus Mw/Mn bei 1,05 bis 10 liegt, vorzugsweise von 1,05 bis 2,5, alternativ bevorzugt von 3,5 bis 6. Ebenfalls bevorzugte Zusammensetzungen enthalten diese Siloxanoligomere deren Gewichtsmittel des Molekulargewichts (Mw) größer 10.000 g/mol und deren Zahlenmittel des Molekulargewichts (Mn) größer gleich 1500 g/mol sind, wobei optional die Polydispersität (D) als Quotient aus Mw/Mn bei 3,5 bis 6 liegt.

Gegenstand der Erfindung sind daher auch Zusammensetzung in denen das Gewichtsmittel des Molekulargewichts (Mw) der N-Vinylbenzylaminalkyl-funktionellen Siloxanole und/oder der Salze der protonierten N-Vinylbenzylaminalkyl-funktionellen Siloxanole größer gleich 1.000 g/mol und kleiner gleich 100.000 g/mol, insbesondere größer gleich 1.000 g/mol und kleiner gleich 10.000 g/mol, und/oder das Zahlenmittel des Molekulargewichts (Mn) der N-Vinylbenzylaminalkyl-funktionellen Siloxanole und/oder der Salze der protonierten N-Vinylbenzylaminalkyl-funktionellen Siloxanole größer gleich 700 g/mol und kleiner gleich 100.000 g/mol sind, vorzugsweise größer gleich 700 g/mol und kleiner gleich 10.000 g/mol. Nach einer Alternative kann das Gewichtsmittel des Molekulargewichts (Mw) größer gleich 10.000 g/mol kleiner gleich 50.000 g/mol und/oder das Zahlenmittel des Molekulargewichts (Mn) größer gleich 800 g/mol, bevorzugt größer gleich 1.500 g/mol, und kleiner gleich 50.000 g/mol sein.

Bevorzugt ist eine Zusammensetzung deren N-Vinylbenzylaminalkyl-funktionellen Siloxanole und/oder der Salze der protonierten N-Vinylbenzylaminalkyl-funktionellen Siloxanole vollständig hydrolysiert sind, insbesondere beträgt der Gehalt an Alkoxy-Gruppen kleiner 0,1 Gew.-% in Bezug auf die Siloxanole, bevorzugt kleiner 0,01 Gew.-%.

Nach einer alternativen bevorzugten Ausführungsform beträgt die Viskosität der wässrigen Zusammensetzungen 1 bis 500 [mPas, bei 20 °C], insbesondere 10 bis 400 [mPas, bei 20 °C], bevorzugt 50 bis 350 [mPas, bei 20 °C]. Des Weiteren ist es bevorzugt, wenn nach einer Lagerung bei 60 °C über 21 Tage die Viskosität der wässrigen Zusammensetzung, insbesondere mit einem Gehalt an N-Vinylbenzylaminalkyl-funktionellen Siloxanole und/oder der Salze der protonierten N-Vinylbenzylaminalkyl-funktionellen Siloxanole von 20 bis 60 Gew-%, bevorzugt von 30 bis 40 Gew.-%, gemessen bei 20 °C, im Bereich von 50 bis 500 [mPas, bei 20 °C] liegt, vorzugsweise im Bereich von 100 bis 350 [mPas, bei 20 °C]. Ermittelt werden kann die Viskosität nach DIN53015.

Besonders bevorzugte wässrige Zusammensetzungen weisen einen Gehalt an

i) freiem Alkohol in der Gesamtzusammensetzung kleiner gleich 0,5 Gew.-% auf, insbesondere kleiner 0,25 Gew.-% und besonders bevorzugt von kleiner gleich 0,1 Gew.-% in Bezug auf die Gesamtzusammensetzung auf, und optional beträgt der Gehalt

ii) an hydrolysierbaren Alkoxy-Gruppen kleiner 5 Gew.-%, bevorzugt kleiner gleich 1,0 Gew.-%, besonders bevorzugt kleiner gleich 0,5 Gew-%, vorzugsweise kleiner gleich 0,1 Gew.-%, oder bevorzugt kleiner gleich 0,01 Gew.-% in der Gesamtzusammensetzung.

Dabei ist es bevorzugt, wenn die wässrige Zusammensetzung im Wesentlichen frei von organischen Verdünnungsmitteln ist und beim Vernetzen im Wesentlichen keinen Alkohol mehr freisetzt, insbesondere umfasst die Zusammensetzung im Wesentlichen nur Wasser, wasserlösliche N-Vinylbenzylaminalkyl-funktionelle Siloxanole und/oder Salze der protonierten N-Vinylbenzylaminalkyl-funktionellen Siloxanole oder Gemische davon und optional mindestens eine Säure oder deren hydrolysierte Produkte.

Geeignete Aminoalkyl-funktionelle Alkoxysilane zur Herstellung der Zusammensetzung können der Formel I entsprechen

$$(R^1O)_{3-a-b}(R^2)_aSi(B)_{1+b} \qquad (I)$$

und die Gruppe-B in Formel I unabhängig einer Gruppe der Formel II

$$-(CH_2)_c-[(NH)(CH_2)_d]_e[(NH)](CH_2)_f]_gNH_{(2-h)}R^3_h \qquad (II)$$

entspricht, in Formel I mit $R^1$ unabhängig eine lineare, verzweigte oder cyclische Alkyl-Gruppe mit 1 bis 8 C-Atomen, insbesondere mit 1, 2, 3 oder 4 C-Atomen, $R^2$ unabhängig eine lineare, verzweigte oder cyclische Alkyl-Gruppe mit 1 bis 8 C-Atomen ist, und $R^3$ in Formel II unabhängig eine lineare, verzweigte oder cyclische Alkyl-, Aryl- oder Alkylaryl-Gruppe mit 1 bis 8 C-Atomen ist; und in

Formel I ist a unabhängig gleich 0 oder 1, b unabhängig gleich 0, 1 oder 2, bevorzugt ist b gleich 0, in Formel II ist c unabhängig ausgewählt aus 1, 2, 3, 4, 5 und 6; d ist unabhängig ausgewählt aus 1, 2, 3, 4, 5 und 6; e ist unabhängig ausgewählt aus 0, 1, 2, 3, 4, 5 und 6; f ist unabhängig ausgewählt aus 1, 2, 3, 4, 5 und 6; g ist unabhängig ausgewählt aus 0, 1, 2, 3, 4, 5 und 6; und h ist unabhängig 0 oder 1, oder die Gruppe B in Formel I entspricht einer Gruppe der Formel III

$$-(CH_2)_j-NH_{2-p}(CH_2-CH_2-NH_2)_p \qquad (III)$$

mit j = 1, 2 oder 3 und p = 0, 1 oder 2, bevorzugt ist p ausgewählt aus 0 und 1.

Besonders bevorzugt sind Aminoalkyl-funktionelle Alkoxysilane der Formel I, insbesondere mit $R_1O$- gleich Alkoxy ausgewählt aus Methoxy- und Ethoxy- und a = 0 und b = b,

$$(R^1O)_{3-a-b}(R^2)_aSi(B)_{1+b} \qquad (I)$$

wobei die Gruppe B in Formel I der Gruppe der Formel III entspricht

$$-(CH_2)_3-NH-CH_2-CH_2-NH_2 \qquad (III).$$

$$-(CH_2)_3-NH-CH_2-CH_2-NH_2 \qquad (III).$$

mit a unabhängig gleich 0 oder 1, b unabhängig gleich 0, 1 oder 2, bevorzugt ist b gleich 0, vorzugsweise mit a = 0 und b = 0 oder 1, insbesondere mit b = 0.

Generell ist es bevorzugt, wenn das Aminoalkyl-funktionelle Alkoxysilan einem Diaminoalkylfunktionellen oder einem Triaminoalkyl-funktionellen Alkoxysilan der Formel I entspricht. Ebenso besonders bevorzugt sind Gemische der vorgenannten Silane, wie Aminosilan mit Diaminosilan oder auch Aminosilan mit Triaminosilan oder Diaminosilan mit Triaminosilan sowie auch Gemische mit drei oder mehr verschiedenen Aminosilanen der Formel I.

Gleichfalls Gegenstand der Erfindung ist ein Verfahren, sowie insbesondere das Verfahren zur Herstellung der Zusammensetzung nach Anspruch 1, umfassend die Schritte

- Vorlegen mindestens eines Aminoalkyl-funktionellen Alkoxysilans oder eines Gemisches von Aminoalkyl-funktionellen Alkoxysilanen, optional als alkoholische Zusammensetzung,
- Zugeben von 0,5 bis 4,5 mol Wasser/mol Silicium-Atome der Amino-funktionellen Alkoxysilane, insbesondere von 1,0 bis 3,5 mol Wasser/mol Silicium-Atome, bevorzugt von 1,5 bis 3,0 mol Wasser/mol Silicium-Atome, insbesondere mit jeweils plus/minus 0,15 mol,
- optional wird unter Durchmischung die Temperatur im Bereich von 40 bis 65 °C gehalten,
- Erhalten einer Zusammensetzung umfassend Hydrolyseprodukte und optional Kondensationsprodukte der Hydrolyseprodukte des mindestens einen Aminoalkyl-funktionellen Alkoxysilans sowie Hydrolysealkohol,
- Umsetzen der Hydrolyseprodukte und optional der Kondensationsprodukte der Hydrolyseprodukte mit Vinylbenzylhalogenid, insbesondere Vinylbenzylchlorid, wobei das Vinylbenzylhalogenid im molaren Verhältnis von 1,0 zu 0,60 bis 1,0 zu 1,15 in Bezug auf die Aminoalkyl-funktionellen Alkoxysilane oder des Gemisches von Aminoalkyl-funktionellen Alkoxysilanen, vorzugsweise im molaren Verhältnis von 1 zu 0,99 bis 1,01, und optional
- Zugabe des Vinylhalogenids, insbesondere bei einer Temperatur im Bereich von 40 bis 60°C sowie vorzugsweise einer Umsetzung in diesem Temperaturbereich,
- Erhalten einer Zusammensetzung von N-Vinylbenzylaminalkyl-funktionelle Siloxanolen und optional Salzen der protonierten N-Vinylbenzylaminalkyl-funktionellen Siloxanole,
- Einstellen des pH-Wertes der Zusammensetzung, indem Säure ausgewählt aus anorganischer oder organischer Säure oder Gemischen dieser zugesetzt wird,
- Zugabe von Wasser, insbesondere destilliertem Wasser, und
- Abtrennen des Alkohols und optional des Hydrolysealkohol und
- Erhalten einer wässrigen Zusammensetzung umfassend N-Vinylbenzylaminalkyl-funktionelle Siloxanole und optional Salzen der protonierten N-Vinylbenzylaminalkyl-funktionellen Siloxanole mit einem pH-Wert 2 bis 3,5

wobei die Zusammensetzung einen Alkohol-Gehalt, insbesondere einen Methanol-Gehalt, von <1,0 Gew-%, und eine Lagerstabilität von größer 6 Monaten bei Raumtemperatur aufweist, wobei Raumtemperatur einen Bereich von 20 bis 23 °C umfasst.

In alternativen Verfahrensvarianten kann der pH-Wert durch Zugabe von Säure auch vor der Zugabe des Vinylhalogenids neutral oder sauer eingestellt werden und sodann das Vinylhalogenid zugegeben werden.

Bevorzugt erfolgt das Vorlegen mindestens eines Aminoalkyl-funktionellen Alkoxysilans oder eines Gemisches von Aminoalkyl-funktionellen Alkoxysilanen, als alkoholische Zusammensetzung, indem mindestens ein Aminoalkyl-funktionelles Alkoxysilan oder ein Gemisch von Aminoalkyl-funktionellen Alkoxysilanen als alkoholische Zusammensetzung mit einem Gewichtsverhältnis von Amino-funktionellen Alkoxysilan zu Alkohol, insbesondere Ethanol oder Methanol, von 80 zu 20 bis 30 zu 70 vorlegt oder hergestellt wird.

Nach dem Erhalten einer Zusammensetzung von N-Vinylbenzylaminalkyl-funktionelle Siloxanolen und optional Salzen der protonierten N-Vinylbenzylaminalkyl-funktionellen Siloxanole, erfolgt die Einstellung des pH-Wertes der Zusammensetzung vorzugsweise, indem zuvor die Sumpftemperatur auf 0 °C bis 40 °C eingestellt wird, insbesondere auf 0 °C bis 30 °C, vorzugsweise auf unter 25 °C einstellt, und sodann durch Zugabe einer Säure ausgewählt aus anorganischer oder organischer Säure oder Gemischen dieser, der pH-Wert eingestellt wird, wobei vorzugsweise die Sumpftemperatur nicht über 60 °C ansteigt, insbesondere nicht über 40 °C ansteigt.

Nach einer bevorzugten Alternative umfasst der jeweilige Schritt:

- Zugabe von Wasser, die Zugabe einer definierten Menge an Wasser, insbesondere destilliertes Wasser, und
- Abtrennen des Alkohols und des Hydrolysealkohol umfasst eine destillative Entfernung des Alkohols und Hydrolysealkohols, vorzugsweise im Vakuum bei einer Sumpftemperatur kleiner 60 °C, und
- Erhalten einer wässrigen Zusammensetzung umfassend N-Vinylbenzylaminalkyl-funktionelle Siloxanole und optional Salzen der protonierten N-Vinylbenzylaminalkyl-funktionellen Siloxanole, wobei die Zusammensetzung umfasst 1 bis 70 Gew.-%, insbesondere 30 bis 60 Gew.-% N-Vinylbenzylaminalkyl-funktionelle Siloxanole und/oder Salze der protonierten N-Vinylbenzylaminalkyl-funktionellen Siloxanole, und 30 bis 99 Gew.-%, insbesondere 40 bis 70 Gew.-% Wasser in Bezug auf die Gesamtzusammensetzung von 100 Gew.-%.

Die Abtrennung des Alkohols erfolgt vorzugsweise, indem die resultierende Zusammensetzung mit Wasser verdünnt wird, vorzugsweise wird die 1 bis 100-fache Menge Wasser in Bezug auf die Menge Wasser zur Hydrolyse zugesetzt, bevorzugt wird die 10 bis 30-fache Menge an Wasser zugesetzt, und der Alkohol und Hydrolysealkohol werden bei vermindertem Druck im Vakuum, vorzugsweise Grobvakuum, besonders bevorzugt bei einem Vakuum von kleiner 300 mbar(abs.), insbesondere bei 100 bis 250 mbar (abs.) und vorzugsweise bei einer Sumpftemperatur im Bereich von 20 °C bis 65 °C, insbesondere 35 bis 60 °C aus der Zusammensetzung abdestilliert, optional wird weiteres Wasser, vorzugsweise die 0,5 bis 100-fache Menge in Bezug auf die zur Hydrolyse verwendete Menge Wasser, bevorzugt die 0,5 bis 10-fache Menge Wasser, zugegeben und die wässrige Zusammensetzung erhalten.

Der Schritt Abtrennen des Alkohols sowie des Hydrolysealkohols erfolgt vorzugsweise indem zum Entfernen zumindest eines Teils des Hydrolysealkohols in diesem Schritt weitere Wasser zugesetzt wird, vorzugsweise wird die Menge Destillat durch eine annähernd gleich Menge Wasser ersetzt. Erfindungsgemäß wird nach dem Verfahren eine wässrige Zusammensetzung erhalten, deren Gehalt an i) freiem Alkohol in der Gesamtzusammensetzung kleiner gleich 0,5 Gew.-%, insbesondere kleiner gleich 0,25 Gew.-%, besonders bevorzugt kleiner gleich 0,1 Gew.-% in der Gesamtzusammensetzung aufweist. Der optionale Gehalt ii) optional an hydrolysierbaren Alkoxy-Gruppen beträgt vorzugsweise kleiner 5 Gew.-% in der Gesamtzusammensetzung, insbesondere kleiner 0,1 Gew.-%.

Offenbart ist die Einstellung des pH-Wertes der Zusammensetzung durch Zugabe einer Säure vorzugsweise auf einen pH-Wert von 2,7 bis 4, bevorzugt ein pH-Wert von 2,7 bis 3,75, besonders bevorzugt ein pH-Wert von 2,85 bis 3,5, weiter bevorzugt ein pH-Wert von 3,0 plus/minus 0,5, plus/minus 0,25. Dabei ist es weiter bevorzugt, dass der pH-Wert der erhaltenen wässrigen Zusammensetzung optional überprüft und auf einen der vorgenannten pH-Werte eingestellt wird. Ebenso ist es bevorzugt, wenn im Verfahren die Zugabe eines Vinylhalogenids erfolgt, das vor der Zugabe, insbesondere unmittelbar vor der Zugabe, unter Zusatz mindestens eines Stabilisators, wie tert-Butyl-Brenzcatechin, fraktioniert destilliert wurde.

Geeigneterweise kann die Umsetzung der Hydrolyseprodukte und optional der Kondensationsprodukte der Hydrolyseprodukte mit Vinylbenzylhalogenid bei einer Temperatur im Bereich von 40 bis 60 °C innerhalb von 30 Minuten bis 3 Stunden unter Durchmischung erfolgen.

Nach einer besonders bevorzugten Variante kann das Verfahren wie nachfolgend dargestellt durchgeführt werden, um eine wässrige Zusammensetzung mit einem Alkoholgehalt und optional Hydroysealkoholgehalt von keiner 1,0 Gew.-% zu erhalten, wobei

- in Schritt 1 N-(2-Aminoethyl)-3-aminopropyltrimethoxysilan und Methanol oder N-(2-Aminoethyl)-3-aminopropyltriethoxysilan und Ethanol vorgelegt werden und unter Durchmischung 0,5 bis 4,5 mol Wasser / mol Silizium, insbesondere 0,5 bis 3,0 mol Wasser /mol Silizium, besonders bevorzugt 1,0 bis 3,0 mol Wasser/mol Silizium-Atome, zugetropft werden, und 1 Stunde bei 60°C durchmischt wird, vorzugsweise gerührt wird,
- in Schritt 2 die oligomeren Siloxanole aus Schritt 1 in einem molaren Verhältnis des N-(2-Aminoethyl)-3-aminopropyltrimethoxysilans oder N-(2-Aminoethyl)-3-aminopropyltriethoxy-silans zu Vinylbenzylchlorid von 1,0 zu 0,60 bis 1,0 zu 1,15, vorzugsweise 1 zu 0,99 bis 1,01, zudosiert, insbesondere bei einer Temperatur im Bereich von 40 bis 60°C zudosiert und nachreagieren lässt,
- in Schritt 3 wird das Umsetzungsprodukt aus Schritt 2 mit Säure, insbesondere mit Salzsäure neutralisiert, vorzugsweise angesäuert und mit Wasser verdünnt, anschließend das Methanol oder Ethanol destillativ abgetrennt.

Ebenfalls ist es bevorzugt, wenn das Verfahren vorzugsweise mit einem Aminoalkyl-funktionellen Alkoxysilan, oder einem Hydrolyse- oder Kondensationsprodukt mindestens eines Aminoalkyl-funktionellen Alkoxysilans oder einem Gemisch umfassend mindestens ein Aminoalkyl-funktionelles Alkoxysilan und ein Hydrolyse- und/oder Kondensationsprodukt mindestens eines Aminoalkyl-funktionellen Alkoxysilans ausgewählt aus den folgenden Aminoalkyl-funktionellen Alkoxysilanen, insbesondere der allgemeinen Formel I durchgeführt wird: 3-Aminopropyltrimethoxy-silan, 3-Aminopropyltriethoxysilan, 3-Aminopropylmethyldimethoxysilan, 3-Amino-propylmethyldiethoxysilan, 1-Aminomethyltrimethoxysilan, 1-Aminomethyl-triethoxysilan, 2-Aminoethyltrimethoxysilan, 2-Aminoethyltriethoxysilan, 3-Aminoisobutyl¬trimethoxysilan, 3-Aminoisobutyltriethoxysilan, N-n-Butyl-3-aminopropyltriethoxysilan, N-n-Butyl-3-aminopropylmethyldiethoxysilan, N-n-Butyl-3-aminopropyltrimethoxysilan, N-n-Butyl-3-aminopropylmethyldimethoxysilan, N-n-Butyl-1-amino-methyltriethoxysilan, N-n-Butyl-1-aminomethylmethyldimethoxysilan, N-n-Butyl-1-aminomethyl¬trimethoxy¬silan, N-n-Butyl-1-aminomethylmethyltri¬ethoxy¬silan, Benzyl-3-aminopropyltrimethoxy-silan, Benzyl-3-aminopropyltri¬ethoxysilan, Benzyl-2-aminoethyl-3-aminopropyl¬trimethoxysilan, Benzyl-2-aminoethyl-3-aminopropyltriethoxysilan, Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan, (2-Aminoethylamino)-ethyltrimethoxysilan, (2-Aminoethylamino)-ethyltriethoxy-silan, (1-Aminoethylamino)-methyltrimethoxysilan und (1-Aminoethylamino)-methyltriethoxysilan, wobei insbesondere Di-und oder Triaminoalkoxysilane bevorzugt sind. Besonders bevorzugt sind Diaminoethylen-3-propyltrimethoxysilan, Diaminoethylen-3-propyltriethoxysilan, Triaminodiethylen-3-propyltrimethoxysilan, Triaminodiethylen-3-propyltriethoxysilan.

Gleichfalls Gegenstand der Erfindung ist die Verwendung einer Zusammensetzung oder eines Verfahrensproduktes als Haftvermittler zur Anwendung an anorganischen und organischen Subtraten, Haftvermittler zwischen anorganischen und organischen Oberflächen, zur Beschichtung von anorganischen Partikeln für eine Vernetzung mit Monomeren bei der Herstellung von mit anorganischen Partikeln gefüllten Polymeren, bei der Verstärkung organischer Polymere mit anorganischen Füllstoffen, bei der Beschichtung anorganischer Oberflächen oder organischer Polymere sowie in faserverstärkten Polymeren als Haftvermittler zwischen anorganischen Fasern und organischen Polymeren.

Als anorganische Substrate oder Oberflächen sind Beton, Ziegel, Mörtel, Steine, mineralischer Putz, Metall, Legierungen, Hybridmaterialien, Glas zu verstehen unter organischen Oberflächen werden Polymere, wie Polymere von synthetischen Monomeren, wie Acrylaten, Styrol, Polyamid, PEEK etc., Holz, Papier, Cellulose, Lingnocellulose enthaltende Substrate oder Oberflächen verstanden.

Die vorliegende Erfindung wird anhand der nachfolgenden Beispiele näher erläutert, ohne den Gegenstand zu beschränken.

**Beispiele:**

Bestimmung des Molekulargewichts:

Die Bestimmung von Molmassen bzw. des Molekulargewichts sowie der Molmassenverteilung kann mittels Gelpermeationschromatographie (GPC) erfolgen. Das GPC-Analyseverfahren wird u. a. in "Modern Size-Exclusion Liquid Chromatography", Andre Striegel et al, Verlag Wiley & Sons, 2. Aufl. 2009, ausführlich beschrieben. Dabei kann man zur Kalibrierung der Methode für Siloxananalysen als Standard beispielsweise Divinyltetramethoxydisiloxan verwenden.

Bestimmung des $SiO_2$-Gehaltes: Tiegelmethode: Der $SiO_2$ Gehalt wird durch sauren Aufschluss mit konzentrierter Schwefelsäure und nachfolgender Verdampfung durch Fluorinierung bestimmt.

GC-Analytik:

Im Rahmen der dem Fachmann wohl bekannten GC-Standardananlytik wird der Alkohol und Hydrolysealkoholgehalt durch eine geeignete Kalibrierung und ggf. internen Standard (bspw. Nonan) bestimmt.

Beispiel **1:** Umsetzungsprodukt aus DAMO-Oligomer (3,0 mol $H_2O$/mol Si) / VBC (Vinylbenzylchlorid) und Wasser

Apparatur: 2000ml Vierhalskolben, Tropftrichter, Destillationsbrücke, Intensivkühler, KPG-Rührer, Ölbad mit Temperaturregelung, Vakuumpumpe

In einem 2000ml Vierhalskolben wurden 126,3g (0,568mol) DAMO ((-2-aminoethyl)amino-propyltrimethoxysilan) und 62,0g Methanol vorgelegt. Die Sumpftemperatur steigt dabei von 23°C auf 34°C. Innerhalb von drei Minuten wurden 30,7g (1,705 mol) VE-Wasser zu dosiert. Dabei steigt die Sumpftemperatur auf 49°C an. Bei einer Sumpftemperatur von 50°C wird eine Stunde nachgerührt. Anschließend wird bei einer Sumpftemperatur von 55°C bis 58°C innerhalb von 2,4h 73,7g (0,483 mol) Vinylbenzylchlorid (Isomerengemisch) zu dosiert und zwei Stunden bei dieser Temperatur nachgerührt. Anschließend wurde der Sumpf mit 207,3g Methanol verdünnt. Bei einer Sumpftemperatur von 20°C wurde mit der Zudosierung von Salzsäure conc. (37%ig) begonnen. Innerhalb von drei Minuten wurden 60,9g (0,618mol) konzentrierte Salzsäure zu dosiert. Dabei steigt die Sumpftemperatur auf 37°C an. Anschließend wird der klare Sumpf mit 578,9g VE-Wasser verdünnt und Methanol und Hydrolysemethanol bei einem Absolutdruck von 200mbar bis 170mbar und einer Sumpftemperatur von 42°C bis 55°C abdestilliert. Insgesamt wurden 660,9g Destillat abgenommen und nochmals 24g VE-Wasser zu gegeben. Es wurden 502,2g gelbes, klares und niedrigviskoses Sumpfprodukt erhalten. Nach einem beschleunigten Lagerversuch (drei Wochen 60°C, Umlufttrockenschrank) blieb das Produkt klar und niedrigviskos.

**Analysen:**

- Initial

| Bestimmung | Ergebnis | Methode |
|---|---|---|
| Freies Methanol [w/w %] | 0,1 | s.o. |
| $SiO_2$ Gehalt | 6,8 | s.o. |
| pH | 2,7 | DIN EN ISO 10523 |

(fortgesetzt)

| Bestimmung | Ergebnis | Methode |
|---|---|---|
| Farbzahl [Gardner] | 8 | ISO 4630 |
| Brechzahl | 1,4190 | DIN 51423 |
| Viskosität (20°C) [mPas] | 137 | DIN 53015 |
| Dichte (20°C) [g/cm$^3$] | 1,100 | DIN 51757 |
| Trübung [FNU] | 2,9 | ISO 7027 |

- 3 Wochen 60°C Lagerung

**Tabelle 1.**

| Bestimmung | Ergebnis | Methode |
|---|---|---|
| Viskosität (20°C) [mPas] | 257 | DIN 53015 |
| Farbzahl [Gardner] | 9 | ISO 7027 |

**Molmassenverteilung Beispiel 1 (vor der Lagerung):**

GPC Säule: PSS Novema Max. Vorsäule, Säule 2 und 3: PSS Movema Mac 100A, Detektof 1: Agilent RID G1362A, Eluent: Wasser, Flußrate: 1 ml/Min, Temp: 40 °C

**Tabelle 2.**

| GPC | |
|---|---|
| $M_n$ | 2.289·10$^3$ g/mol |
| $M_W$ | 1.141·10$^4$ g(mol |
| $M_z$ | 2.011·10$^4$ g/mol |
| D | 4.98 |
| $M_p$ | 1.202·10$^4$ g/mol |

**Beispiel 2:** Umsetzungsprodukt aus DAMO-Oligomer (1,5mol $H_2O$/mol Si) / VBC (Vinylbenzylchlorid) und Wasser

Apparatur: 1000ml Vierhalskolben, Tropftrichter, Destillationsbrücke, Intensivkühler, KPG-Rührer, Ölbad mit Temperaturregelung, Vakuumpumpe

In einem 1000ml Vierhalskolben wurden 94,6g (0,425 mol) DAMO ((-2-aminoethyl)-amino-propyltrimethoxysilan) und 51,0g Methanol vorgelegt. Die Sumpftemperatur steigt dabei von 23°C auf 34°C. Innerhalb von drei Minuten wurde ein Gemisch aus 11,5g (0,638 mol) VE-Wasser und 11,5g Methanol zu dosiert. Dabei steigt die Sumpftemperatur auf 49°C an. Bei einer Sumpftemperatur von 50°C wird eine Stunde nachgerührt. Anschließend wird bei einer Sumpftemperatur von 55°C bis 58°C innerhalb von 0,5h 55,4g (0,363 mol) Vinylbenzylchlorid (Isomerengemisch) zu dosiert und zwei Stunden bei dieser Temperatur nach gerührt. Anschließend wurde der Sumpf mit 26,1g Methanol verdünnt. Bei einer Sumpftemperatur von 20°C wurde mit der Zudosierung von Salzsäure conc. (37%ig) begonnen. Innerhalb von vier Minuten wurden 45,7g (0,464mol) konzentrierte Salzsäure zu dosiert. Dabei steigt die Sumpftemperatur auf 36°C an. Anschließend wird der klare Sumpf mit 373,8g VE-Wasser verdünnt und der Hydrolysemethanol bei einem Absolutdruck von 200mbar bis 170mbar und einer Sumpftemperatur von 44°C bis 56°C ab destilliert. Insgesamt werden 291,8 g Destillat abgenommen und nochmals 34,8g VE-Wasser zu gegeben. Es wurden 375,0g gelbes, klares und niedrigviskoses Sumpfprodukt erhalten. Nach einem beschleunigten Lagerversuch (drei Wochen 60°C) blieb das Produkt klar und niedrigviskos.

**Analysen:**

- Initial

| Bestimmung | Ergebnis | Methode |
|---|---|---|
| Freies Methanol [w/w %] | 0,2 | s.o. |
| $SiO_2$ Gehalt | 6,9 | s.o. |
| pH | 2,7 | DIN EN ISO 10523 |
| Farbzahl [Gardner] | 8 | ISO 4630 |
| Brechzahl | 1,4205 | DIN 51423 |
| Viskosität (20°C) [mPas] | 207 | DIN 53015 |
| Dichte (20°C) [g/cm³] | 1,102 | DIN 51757 |
| Trübung [FNU] | 1,9 | ISO 7027 |

- 3 Wochen 60°C Lagerung

**Tabelle 3.**

| Bestimmung | Ergebnis | Methode |
|---|---|---|
| Viskosität (20°C) [mPas] | 217 | DIN 53015 |
| Farbzahl [Gardner] | 8 | ISO 7027 |

**Molmassenverteilung Beispiel** 2 (vor **der Lagerung):**

GPC Säule: PSS Novema Max. Vorsäule, Säule 2 und 3: PSS Movema Mac 100A, Detektof 1: Agilent RID G1362A, Eluent: Wasser, Flußrate: 1 ml/Min, Temp: 40 °C

**Tabelle 4.**

| GPC | |
|---|---|
| $M_n$ | $8.886 \cdot 10^3$ g/mol |
| $M_W$ | $1.104 \cdot 10^4$ g(mol |
| $M_z$ | $1.717 \cdot 10^4$ g/mol |
| D | 1,24 |
| $M_p$ | $1.200 \cdot 10^4$ g/mol |

**Vergleichsbeispiel 1:** Wässriges Hydrolysat aus (N-vinylbenzyl-2-aminoethyl)aminopropyltrimethoxysilanhydrochlorid

Apparatur: 2000ml Vierhalskolben, Tropftrichter, Destillationsbrücke, Intensivkühler, KPG-Rührer, Ölbad mit Temperaturregelung, Vakuumpumpe

In einem 2000ml Vierhalskolben wurden 499,5g (0,605 mol) (N-vinylbenzyl-2-aminoethyl) aminopropyltrimethoxysilanhydrochlorid, 42%ig in Methanol vorgelegt. Innerhalb von 0,5h wurde 58,7g konzentriere Salzsäure, 37%ig (0,645 mol HCL r.S. / 2,22mol $H_2O$) zu dosiert. Dabei stieg die Sumpftemperatur auf 45°C an. Bei einem Absolutdruck von 300mbar bis 130mar und einer Sumpftemperatur von ca. 60°C wurden insgesamt 737,8g Destillat abgenommen. Während der Destillation wurden 713,8g VE-Wasser zugegeben. Es wurden 507,7g klares gelb/rötliches und niedrigviskoses Produkt erhalten.
Das Produkt wurde nach 1d Lagerung bei 60°C (im Umlufttrockenschrank) fest.

**Analysen:**

- Initial

1) Messung nach 5d RT Lagerung **Tabelle 5.**

| Bestimmung | Ergebnis | Methode |
|---|---|---|
| Freies Methanol [w/w %] | <0,1 | s.o. |
| SiO$_2$ Gehalt | 6,9 | s.o. |
| pH | 2,8 | DIN EN ISO 10523 |
| Farbzahl [Gardner] | 9 | ISO 4630 |
| Viskosität (20°C) [mPas] | | DIN 53015 |
| Dichte (20°C) [g/cm$^3$] | 1,108 | DIN 51757 |
| Trübung [FNU][1] | 12,6 | ISO 7027 |

**Patentansprüche**

1. Wässrige Zusammensetzung umfassend N-Vinylbenzylaminalkyl-funktionelle Siloxanole und optional Salze der protonierten N-Vinylbenzylaminalkyl-funktionellen Siloxanole, die abgeleitet sind aus einer Umsetzung

   - von Hydrolyseprodukten und optional Kondensationsprodukten von Hydrolyseprodukten mindestens eines Aminoalkyl-funktionellen Alkoxysilans oder eines Gemisches von Aminoalkyl-funktionellen Alkoxysilanen mit
   - Vinylbenzylhalogenid, wobei
   - die Zusammensetzung umfasst

      - 1 bis 70 Gew.-% N-Vinylbenzylaminalkyl-funktionelle Siloxanole und/oder Salze der protonierten N-Vinylbenzylaminalkyl-funktionellen Siloxanole,
      - 30 bis 99 Gew.-% Wasser in Bezug auf die Gesamtzusammensetzung von 100 Gew.% mit einem pH-Wert von 2 bis 3,5, und

   wobei die Zusammensetzung einen Alkohol-Gehalt, insbesondere einen Methanol-Gehalt, von <1,0 Gew-%, und eine Lagerstabilität von größer 6 Monaten bei Raumtemperatur aufweist, wobei Raumtemperatur einen Bereich von 20 bis 23 °C umfasst.

2. Zusammensetzung nach Anspruch 1, **dadurch gekennzeichnet, dass** die Zusammensetzung ii) größer gleich 0,1 Gew.-% Säure ausgewählt aus anorganischer oder organischer Säure oder Gemischen dieser enthält.

3. Zusammensetzung nach Anspruch 2, **dadurch gekennzeichnet, dass** die Säure ausgewählt ist aus Salzsäure, Ameisensäure, Essigsäure, Oxalsäure oder Fumarsäure.

4. Zusammensetzung nach einem der Ansprüche 1 bis 3, **dadurch gekennzeichnet, dass** das Gewichtsmittel des Molekulargewichts (Mw) der N-Vinylbenzylaminalkyl-funktionellen Siloxanole und/oder der Salze der protonierten N-Vinylbenzylaminalkyl-funktionellen Siloxanole größer gleich 1.000 g/mol und/oder das Zahlenmittel des Molekulargewichts (Mn) der N-Vinylbenzylaminalkyl-funktionellen Siloxanole und/oder der Salze der protonierten N-Vinylbenzylaminalkyl-funktionellen Siloxanole größer gleich 700 g/mol sind, insbesondere ist das Gewichtsmittel des Molekulargewichts (Mw) größer gleich 10.000 g/mol und/oder das Zahlenmittel des Molekulargewichts (Mn) größer gleich 800 g/mol, bevorzugt größer gleich 1.500 g/mol.

5. Zusammensetzung nach einem der Ansprüche 1 bis 4, **dadurch gekennzeichnet, dass** je Mol Stickstoff-Atome der Siloxanole 0,2 bis 1,5 Mol Protonen (Hydron) und Anionen der Halogenide und optional der Säure in der Gesamtzusammensetzung enthalten sind.

6. Zusammensetzung nach einem der Ansprüche 1 bis 5, **dadurch gekennzeichnet, dass** der Gehalt an

i) freiem Alkohol in der Gesamtzusammensetzung kleiner gleich 0,5 Gew.-% beträgt und

ii) optional an hydrolysierbaren Alkoxy-Gruppen kleiner 5 Gew.-% in der Gesamtzusammensetzung beträgt.

7. Zusammensetzung nach einem der Ansprüche 1 oder 6, **dadurch gekennzeichnet, dass** das Aminoalkyl-funktionelle Alkoxysilan der Formel I entspricht

$$(R^1O)_{3-a-b}(R^2)_a Si(B)_{1+b} \qquad (I)$$

und die Gruppe-B in Formel I unabhängig einer Gruppe der Formel II

$$-(CH_2)_c-[(NH)(CH_2)_d]_e[(NH)](CH_2)_f]_g NH_{(2-h)}R^3{}_h \qquad (II)$$

entspricht, in Formel I mit $R^1$ unabhängig eine lineare, verzweigte oder cyclische Alkyl-Gruppe mit 1 bis 8 C-Atomen, insbesondere mit 1, 2, 3 oder 4 C-Atomen, $R^2$ unabhängig eine lineare, verzweigte oder cyclische Alkyl-Gruppe mit 1 bis 8 C-Atomen ist, und $R^3$ in Formel II unabhängig eine lineare, verzweigte oder cyclische Alkyl-, Aryl- oder Alkylaryl-Gruppe mit 1 bis 8 C-Atomen ist; und in Formel I ist a unabhängig gleich 0 oder 1, b unabhängig gleich 0, 1 oder 2, bevorzugt ist b gleich 0, in Formel II ist c unabhängig ausgewählt aus 1, 2, 3, 4, 5 und 6; d ist unabhängig ausgewählt aus 1, 2, 3, 4, 5 und 6; e ist unabhängig ausgewählt aus 0, 1, 2, 3, 4, 5 und 6; f ist unabhängig ausgewählt aus 1, 2, 3, 4, 5 und 6; g ist unabhängig ausgewählt aus 0, 1, 2, 3, 4, 5 und 6; und h ist unabhängig 0 oder 1, oder die Gruppe B in Formel I entspricht einer Gruppe der Formel III

$$-(CH_2)_j-NH_{2-p}(CH_2-CH_2-NH_2)_p \qquad (III)$$

mit j = 1, 2 oder 3 und p = 0, 1 oder 2, bevorzugt ist p ausgewählt aus 0 und 1.

8. Zusammensetzung nach Anspruch 1 oder 7, **dadurch gekennzeichnet, dass** das Aminoalkyl-funktionelle Alkoxysilan der Formel I entspricht

$$(R^1O)_{3-a-b}(R^2)_a Si(B)_{1+b} \qquad (I)$$

und die Gruppe B in Formel I der Gruppe der Formel III entspricht

$$-(CH_2)_3-NH-CH_2-CH_2-NH_2 \qquad (III).$$

9. Zusammensetzung nach einem der Ansprüche 1 bis 8, **dadurch gekennzeichnet, dass** das Gewichtsmittel des Molekulargewichts (Mw) der N-Vinylbenzylaminalkyl-funktionellen Siloxanole und/oder der Salze der protonierten N-Vinylbenzylaminalkyl-funktionellen Siloxanole größer gleich 1.000 g/mol und kleiner gleich 100.000 g/mol und/oder das Zahlenmittel des Molekulargewichts (Mn) der N-Vinylbenzylaminalkyl-funktionellen Siloxanole und/oder der Salze der protonierten N-Vinylbenzylaminalkyl-funktionellen Siloxanole größer gleich 700 g/mol und kleiner gleich 100.000 g/mol sind, insbesondere ist das Gewichtsmittel des Molekulargewichts (Mw) größer gleich 10.000 g/mol kleiner gleich 50.000 g/mol und/oder das Zahlenmittel des Molekulargewichts (Mn) größer gleich 800 g/mol, bevorzugt größer gleich 1.500 g/mol, und kleiner gleich 50.000 g/mol sind.

10. Verfahren, insbesondere zur Herstellung der Zusammensetzung nach einem der Ansprüche 1 bis 9, mit den Schritten

- Vorlegen mindestens eines Aminoalkyl-funktionellen Alkoxysilans oder eines Gemisches von Aminoalkyl-funktionellen Alkoxysilanen, optional als alkoholische Zusammensetzung,
- Zugeben von 0,5 bis 4,5 mol Wasser/mol Silicium-Atome,
- optional wird unter Durchmischung die Temperatur im Bereich von 40 bis 65 °C gehalten,
- Erhalten einer Zusammensetzung umfassend Hydrolyseprodukte und optional Kondensationsprodukte der Hydrolyseprodukte des mindestens einen Aminoalkyl-funktionellen Alkoxysilans sowie Hydrolysealkohol,
- Umsetzen der Hydrolyseprodukte und optional der Kondensationsprodukte der Hydrolyseprodukte mit Vinylbenzylhalogenid, insbesondere Vinylbenzylchlorid, wobei das Vinylbenzylhalogenid im molaren Verhältnis von 1,0 zu 0,60 bis 1,0 zu 1,15 in Bezug auf die Aminoalkyl-funktionellen Alkoxysilane oder des Gemisches von Aminoalkyl-funktionellen Alkoxysilanen zugegeben wird, und optional Zugabe des Vinylhalogenids bei einer Temperatur im Bereich von 40 bis 60°C sowie vorzugsweise Umsetzung in diesem Temperaturbereich,
- Erhalten einer Zusammensetzung von N-Vinylbenzylaminalkyl-funktionelle Siloxanolen und optional Salzen der protonierten N-Vinylbenzylaminalkyl-funktionellen Siloxanole,

- Einstellen des pH-Wertes der Zusammensetzung, indem Säure ausgewählt aus anorganischer oder organischer Säure oder Gemischen dieser zugesetzt wird,
- Zugabe von Wasser, insbesondere destilliertem Wasser, und
- Abtrennen des Alkohols und des Hydrolysealkohol und
- Erhalten einer wässrigen Zusammensetzung umfassend N-Vinylbenzylaminalkyl-funktionelle Siloxanole und optional Salzen der protonierten N-Vinylbenzylaminalkyl-funktionellen Siloxanole mit einem pH-Wert von 2 bis 3,5 ,
- wobei die Zusammensetzung einen Alkohol-Gehalt, insbesondere einen Methanol-Gehalt, von <1,0 Gew-%, und eine Lagerstabilität von größer 6 Monaten bei Raumtemperatur aufweist, wobei Raumtemperatur einen Bereich von 20 bis 23 °C umfasst.

11. Verfahren nach Anspruch 10, **dadurch gekennzeichnet, dass** der jeweilige Schritt

- Zugabe von Wasser, die Zugabe einer definierten Menge an Wasser umfasst, insbesondere destilliertem Wasser, und
- Abtrennen des Alkohols und des Hydrolysealkohol umfasst eine destillative Entfernung des Alkohols und Hydrolysealkohols, vorzugsweise im Vakuum bei einer Sumpftemperatur kleiner 60 °C, und
- Erhalten einer wässrige Zusammensetzung umfassend N-Vinylbenzylaminalkyl-funktionelle Siloxanole und optional Salzen der protonierten N-Vinylbenzylaminalkyl-funktionellen Siloxanole eine Zusammensetzung umfasst mit
- 1 bis 70 Gew.-% N-Vinylbenzylaminalkyl-funktionelle Siloxanole und/oder Salze der protonierten N-Vinylbenzylaminalkyl-funktionellen Siloxanole, und 30 bis 99 Gew.-% Wasser in Bezug auf die Gesamtzusammensetzung von 100 Gew.-%.

12. Verfahren nach Anspruch 10 oder 11, **dadurch gekennzeichnet, dass** die wässrige Zusammensetzung einen Gehalt an i) freiem Alkohol in der Gesamtzusammensetzung kleiner gleich 0,5 Gew.-% in der Gesamtzusammensetzung aufweist und ii) optional an hydrolysierbaren Alkoxy-Gruppen kleiner 5 Gew.-% in der Gesamtzusammensetzung.

13. Verfahren nach Anspruch 10 oder 11, **dadurch gekennzeichnet, dass** mindestens ein Aminoalkyl-funktionelles Alkoxysilan oder ein Gemisch von Aminoalkyl-funktionellen Alkoxysilanen als alkoholische Zusammensetzung mit einem Gewichtsverhältnis von Amino-funktionellen Alkoxysilan zu Alkohol, insbesondere Ethanol oder Methanol, von 80 zu 20 bis 30 zu 70 vorlegt werden.

14. Verwendung einer Zusammensetzung nach einem der Ansprüche 1 bis 9 oder eines Verfahrensproduktes nach einem der Ansprüche 10 bis 13, als Haftvermittler zur Anwendung an anorganischen und organischen Subtraten, Haftvermittler zwischen anorganischen und organischen Oberflächen, zur Beschichtung von anorganischen Partikeln für eine Vernetzung mit Monomeren bei der Herstellung von mit anorganischen Partikeln gefüllten Polymeren, bei der Verstärkung organischer Polymere mit anorganischen Füllstoffen, bei der Beschichtung anorganischer Oberflächen oder organischer Polymere sowie in faserverstärkten Polymeren als Haftvermittler zwischen anorganischen Fasern und organischen Polymeren.

**Claims**

1. Aqueous composition comprising N-vinylbenzylaminoalkyl-functional siloxanols and optionally salts of the protonated N-vinylbenzylaminoalkyl-functional siloxanols which are derived from a reaction

- of hydrolysis products and optionally condensation products of hydrolysis products of at least one aminoalkyl-functional alkoxysilane or a mixture of aminoalkyl-functional alkoxysilanes with
- vinylbenzyl halide, wherein
- the composition comprises
- 1% to 70% by weight of N-vinylbenzylaminoalkyl-functional siloxanols and/or salts of the protonated N-vinylbenzylaminoalkyl-functional siloxanols,
- 30% to 99% by weight of water based on the total composition of 100% by weight with a pH of 2 to 3.5, and wherein the composition has an alcohol content, in particular a methanol content, of <1.0% by weight and a storage stability of greater than 6 months at room temperature, wherein room temperature comprises a range from 20°C to 23°C.

2. Composition according to Claim 1, **characterized in that** the composition
ii) contains not less than 0.1% by weight of acid selected from inorganic or organic acid or mixtures thereof.

3. Composition according to Claim 2, **characterized in that** the acid is selected from hydrochloric acid, formic acid, acetic acid, oxalic acid or fumaric acid.

4. Composition according to any of Claims 1 to 3, **characterized in that** the weight average molecular weight (Mw) of the N-vinylbenzylaminoalkyl-functional siloxanols and/or the salts of the protonated N-vinylbenzylaminoalkyl-functional siloxanols is not less than 1000 g/mol and/or the number average molecular weight (Mn) of the N-vinylbenzylaminoalkyl-functional siloxanols and/or the salts of the protonated N-vinylbenzylaminoalkyl-functional siloxanols is not less than 700 g/mol, in particular the weight average molecular weight (Mw) is not less than 10 000 g/mol and/or the number average molecular weight (Mn) is not less than 800 g/mol, preferably not less than 1500 g/mol.

5. Composition according to any of Claims 1 to 4, **characterized in that** 0.2 to 1.5 mol of protons (hydrons) and anions of the halides and optionally of the acid are present in the total composition per mol of nitrogen atoms of the siloxanols.

6. Composition according to any of Claims 1 to 5, **characterized in that** the content of

   i) free alcohol in the total composition is not more than 0.5% by weight and
   ii) optionally of hydrolysable alkoxy groups is less than 5% by weight in the total composition.

7. Composition according to either of Claims 1 and 6, **characterized in that** the aminoalkyl-functional alkoxysilane corresponds to formula I

$$(R^1O)_{3-a-b}(R^2)_aSi(B)_{1+b} \qquad (I)$$

and group B in formula I independently corresponds to a group of formula II

$$-(CH_2)_c-[(NH)(CH_2)_d]_e[(NH)](CH_2)_f]_gNH_{(2-h)}R^3_h \qquad (II),$$

in formula I $R^1$ independently represents a linear, branched or cyclic alkyl group having 1 to 8 carbon atoms, in particular having 1, 2, 3 or 4 carbon atoms, $R^2$ independently represents a linear, branched or cyclic alkyl group having 1 to 8 carbon atoms, and $R^3$ in formula II independently represents a linear, branched or cyclic alkyl, aryl or alkylaryl group having 1 to 8 carbon atoms; and in formula I a is independently 0 or 1, b is independently 0, 1 or 2, b is preferably 0; in formula II c is independently selected from 1, 2, 3, 4, 5 and 6; d is independently selected from 1, 2, 3, 4, 5 and 6; e is independently selected from 0, 1, 2, 3, 4, 5 and 6; f is independently selected from 1, 2, 3, 4, 5 and 6; g is independently selected from 0, 1, 2, 3, 4, 5 and 6; and h is independently 0 or 1; or group B in formula I corresponds to a group of formula III

$$- (CH_2)_j-NH_{2-p}(CH_2-CH_2-NH_2)_p \qquad (III)$$

where j = 1, 2 or 3 and p = 0, 1 or 2; p is preferably selected from 0 and 1.

8. Composition according to Claim 1 or 7, **characterized in that** the aminoalkyl-functional alkoxysilane corresponds to formula I

$$(R^2O)_{3-a-b}(R^2)_aSi(B)_{1+b} \qquad (I)$$

and group B in formula I corresponds to the group of formula III

$$-(CH_2)_3-NH-CH_2-CH_2-NH_2 \qquad (III).$$

9. Composition according to any of Claims 1 to 8, **characterized in that** the weight average molecular weight (Mw) of the N-vinylbenzylaminoalkyl-functional siloxanols and/or the salts of the protonated N-vinylbenzylaminoalkyl-functional siloxanols is not less than 1000 g/mol and not more than 100 000 g/mol and/or the number average molecular weight (Mn) of the N-vinylbenzylaminoalkyl-functional siloxanols and/or the salts of the protonated N-vinylbenzylaminoalkyl-functional siloxanols is not less than 700 g/mol and not more than 100 000 g/mol, in particular the weight average molecular weight (Mw) is not less than 10 000 g/mol and not more than 50 000 g/mol and/or the number average molecular weight (Mn) is not less than 800 g/mol, preferably not less than 1500 g/mol, and not more than 50 000 g/mol.

10. Process, in particular for producing the composition according to any of Claims 1 to 9, comprising the steps of

- initially charging at least one aminoalkyl-functional alkoxysilane or a mixture of aminoalkyl-functional alkoxysilanes, optionally as an alcoholic composition,
- adding 0.5 to 4.5 mol of water/mol of silicon atoms,
- optionally maintaining the temperature in the range from 40°C to 65°C with mixing,
- obtaining a composition comprising hydrolysis products and optionally condensation products of the hydrolysis products of the at least one aminoalkyl-functional alkoxysilane and hydrolysis alcohol,
- reacting the hydrolysis products and optionally the condensation products of the hydrolysis products with vinylbenzyl halide, in particular vinylbenzyl chloride, wherein the vinylbenzyl halide is added in a molar ratio of 1.0 : 0.60 to 1.0 : 1.15 based on the aminoalkyl-functional alkoxysilanes or the mixture of aminoalkyl-functional alkoxysilanes, and optionally adding the vinyl halide at a temperature in the range from 40°C to 60°C and preferably reacting in this temperature range,
- obtaining a composition of N-vinylbenzylaminoalkyl-functional siloxanols and optionally salts of the protonated N-vinylbenzylaminoalkyl-functional siloxanols,
- adjusting the pH of the composition by adding acid selected from inorganic or organic acid or mixtures thereof,
- adding water, in particular distilled water, and
- removing the alcohol and the hydrolysis alcohol and
- obtaining an aqueous composition comprising N-vinylbenzylaminoalkyl-functional siloxanols and optionally salts of the protonated N-vinylbenzylaminoalkyl-functional siloxanols with a pH of 2 to 3.5,
- wherein the composition has an alcohol content, in particular a methanol content, of <1.0% by weight, and a storage stability of greater than 6 months at room temperature, wherein room temperature comprises a range from 20°C to 23°C.

11. Process according to Claim 10, **characterized in that** the respective step

- adding water comprises adding a defined amount of water, in particular distilled water, and
- removing the alcohol and the hydrolysis alcohol comprises a distillative removal of the alcohol and hydrolysis alcohol, preferably under vacuum at a bottoms temperature of less than 60°C, and
- obtaining an aqueous composition comprising N-vinylbenzylaminoalkyl-functional siloxanols and optionally salts of the protonated N-vinylbenzylaminoalkyl-functional siloxanols comprises a composition comprising
- 1% to 70% by weight of N-vinylbenzylaminoalkyl-functional siloxanols and/or salts of the protonated N-vinylbenzylaminoalkyl-functional siloxanols, and 30% to 99% by weight of water based on the total composition of 100% by weight.

12. Process according to Claim 10 or 11, **characterized in that** the aqueous composition has a content of i) free alcohol in the total composition of not more than 0.5% by weight in the total composition and ii) optionally of hydrolysable alkoxy groups of less than 5% by weight in the total composition.

13. Process according to Claim 10 or 11, **characterized in that** it comprises initially charging at least one aminoalkyl-functional alkoxysilane or a mixture of aminoalkyl-functional alkoxysilanes as an alcoholic composition having a weight ratio of amino-functional alkoxysilane to alcohol, in particular ethanol or methanol, of 80 : 20 to 30 : 70.

14. Use of a composition according to any of Claims 1 to 9 or of a process product according to any of Claims 10 to 13 as an adhesion promoter for use on inorganic and organic substrates, as an adhesion promoter between inorganic and organic surfaces, for coating inorganic particles for a crosslinking with monomers in the production of polymers filled with inorganic particles, in the reinforcing of organic polymers with inorganic fillers, in the coating of inorganic surfaces or organic polymers and in fibre-reinforced polymers as adhesion promoters between inorganic fibres and organic polymers.

**Revendications**

1. Composition aqueuse comprenant des siloxanols à fonctionnalité N-vinylbenzylaminoalkyle et éventuellement des sels des siloxanols à fonctionnalité N-vinylbenzylaminoalkyle protonés, qui sont issus d'une transformation

- de produits d'hydrolyse et éventuellement de produits de condensation de produits d'hydrolyse d'au moins un alcoxysilane à fonctionnalité aminoalkyle ou d'un mélange d'alcoxysilanes à fonctionnalité aminoalkyle avec
- un halogénure de vinylbenzyle,
- la composition comprenant
- 1 à 70% en poids de siloxanols à fonctionnalité N-vinylbenzylaminoalkyle et/ou de sels des siloxanols à fonctionnalité N-vinylbenzylaminoalkyle protonés,
- 30 à 99% en poids d'eau, par rapport à la composition totale de 100% en poids, présentant un pH de 2 à 3,5 et la composition présentant une teneur en alcool, en particulier une teneur en méthanol, <1,0% en poids et une stabilité au stockage supérieure à 6 mois à température ambiante, la température ambiante comprenant une plage de 20 à 23°C.

2.  Composition selon la revendication 1, **caractérisée en ce que** la composition
    ii) contient 0,1% en poids ou plus d'acide, choisi parmi les acides inorganiques ou organiques ou leurs mélanges.

3.  Composition selon la revendication 2, **caractérisée en ce que** l'acide est choisi parmi l'acide chlorhydrique, l'acide formique, l'acide acétique, l'acide oxalique ou l'acide fumarique.

4.  Composition selon l'une des revendications 1 à 3, **caractérisée en ce que** la moyenne en poids du poids moléculaire (Mw) des siloxanols à fonctionnalité N-vinylbenzylaminoalkyle et/ou des sels des siloxanols à fonctionnalité N-vinylbenzylaminoalkyle protonés est égale ou supérieure à 1000 g/mole et/ou la moyenne en nombre du poids moléculaire (Mn) des siloxanols à fonctionnalité N-vinylbenzylaminoalkyle et/ou des sels des siloxanols à fonctionnalité N-vinylbenzylaminoalkyle protonés est égale ou supérieure à 700 g/mole, en particulier, la moyenne en poids du poids moléculaire (Mw) est égale ou supérieure à 10 000 g/mole et/ou la moyenne en nombre du poids moléculaire (Mn) est égale ou supérieure à 800 g/mole, de préférence égale ou supérieure à 1500 g/mole.

5.  Composition selon l'une des revendications 1 à 4, **caractérisée en ce que** la composition totale contient, par mole d'atomes d'azote des siloxanols, 0,2 à 1,5 mole de protons (hydron) et d'anions des halogénures et éventuellement de l'acide.

6.  Composition selon l'une des revendications 1 à 5, **caractérisée en ce que** la teneur

    i) en alcool libre dans la composition totale est égale ou inférieure à 0,5% en poids et
    ii) éventuellement, en groupes alcoxy hydrolysables est inférieure à 5% en poids dans la composition totale.

7.  Composition selon l'une des revendications 1 ou 6, **caractérisée en ce que** l'alcoxysilane à fonctionnalité aminoalkyle correspond à la formule I

$$(R^1O)_{3-a-b}(R^2)_a Si(B)_{1+b} \qquad (I)$$

et le groupe B dans la formule I correspond indépendamment à un groupe de formule II

$$-(CH_2)_c-[(NH)(CH_2)_d]_e[(NH)](CH_2)_f]_g NH_{(2-h)}R^3_h, \qquad (II)$$

dans formule I, $R^1$ représente indépendamment un groupe alkyle linéaire, ramifié ou cyclique comprenant 1 à 8 atomes de carbone, en particulier 1, 2, 3 ou 4 atomes de carbone, $R^2$ représente indépendamment un groupe alkyle linéaire, ramifié ou cyclique comprenant 1 à 8 atomes de carbone et $R^3$ dans la formule II représente indépendamment un groupe alkyle, aryle ou alkylaryle linéaire, ramifié ou cyclique comprenant 1 à 8 atomes de carbone ; et dans la formule I, a représente indépendamment 0 ou 1, b représente indépendamment 0, 1 ou 2, de préférence b représente 0, dans la formule II, c est choisi indépendamment parmi 1, 2, 3, 4, 5 et 6 ; d est choisi indépendamment parmi 1, 2, 3, 4, 5 et 6 ; e est choisi indépendamment parmi 0, 1, 2, 3, 4, 5 et 6 ; f est choisi indépendamment parmi 1, 2, 3, 4, 5 et 6 ; g est choisi indépendamment parmi 0, 1, 2, 3, 4, 5 et 6 ; et h représente indépendamment 0 ou 1, ou le groupe B dans la formule I correspond à un groupe de formule III

$$- (CH_2)_j-NH_{2-p}(CH_2-CH_2-NH_2)_p \qquad (III)$$

dans laquelle j = 1, 2 ou 3 et p = 0, 1 ou 2, de préférence, p est choisi parmi 0 et 1.

**8.** Composition selon la revendication 1 ou 7, **caractérisée en ce que** l'alcoxysilane à fonctionnalité aminoalkyle correspond à la formule I

$$(R^1O)_{3-a-b}(R^2)_a Si(B)_{1+b} \qquad (I)$$

et le groupe B dans la formule I correspond au groupe de formule III

$$-(CH_2)_3-NH-CH_2-CH_2-NH_2 \qquad (III).$$

**9.** Composition selon l'une des revendications 1 à 8, **caractérisée en ce que** la moyenne en poids du poids moléculaire (Mw) des siloxanols à fonctionnalité N-vinylbenzylaminoalkyle et/ou des sels des siloxanols à fonctionnalité N-vinylbenzylaminoalkyle protonés est égale ou supérieure à 1000 g/mole et égale ou inférieure à 100 000 g/mole et/ou la moyenne en nombre du poids moléculaire (Mn) des siloxanols à fonctionnalité N-vinylbenzylaminoalkyle et/ou des sels des siloxanols à fonctionnalité N-vinylbenzylaminoalkyle protonés est égale ou supérieure à 700 g/mole et égale ou inférieure à 100 000 g/mole, en particulier, la moyenne en poids du poids moléculaire (Mw) est égale ou supérieure à 10 000 g/mole et égale ou inférieure à 50 000 g/mole et/ou la moyenne en nombre du poids moléculaire (Mn) est égale ou supérieure à 800 g/mole, de préférence égale ou supérieure à 1500 g/mole et égale ou inférieure à 50 000 g/mole.

**10.** Procédé, en particulier pour la préparation de la composition selon l'une des revendications 1 à 9, comprenant les étapes de

- disposition au préalable d'au moins un alcoxysilane à fonctionnalité aminoalkyle ou d'un mélange d'alcoxysilanes à fonctionnalité aminoalkyle, le cas échéant sous forme de composition alcoolique,
- ajout de 0,5 à 4,5 moles d'eau/mole d'atomes de silicium,
- éventuellement, tout en mélangeant, maintien de la température dans la plage de 40 à 65°C,
- obtention d'une composition comprenant des produits d'hydrolyse et éventuellement des produits de condensation des produits d'hydrolyse dudit au moins un alcoxysilane à fonctionnalité aminoalkyle ainsi que de l'alcool d'hydrolyse,
- transformation des produits d'hydrolyse et éventuellement des produits de condensation des produits d'hydrolyse avec un halogénure de vinylbenzyle, en particulier du chlorure de vinylbenzyle, l'halogénure de vinylbenzyle étant ajouté dans un rapport molaire de 1,0:0,60 à 1,0:1,15 par rapport à l'alcoxysilane à fonctionnalité aminoalkyle ou au mélange d'alcoxysilanes à fonctionnalité aminoalkyle et éventuellement ajout de l'halogénure de vinyle à une température dans la plage de 40 à 60°C ainsi que de préférence transformation dans cette plage de température,
- obtention d'une composition de siloxanols à fonctionnalité N-vinylbenzylaminoalkyle et éventuellement de sels des siloxanols à fonctionnalité N-vinylbenzylaminoalkyle protonés,
- réglage du pH de la composition en ce qu'un acide choisi par les acides inorganiques et organiques ou des mélanges de ceux-ci est ajouté,
- ajout d'eau, en particulier d'eau distillée et
- séparation de l'alcool et de l'alcool d'hydrolyse et
- obtention d'une composition aqueuse comprenant des siloxanols à fonctionnalité N-vinylbenzylaminoalkyle et éventuellement des sels des siloxanols à fonctionnalité N-vinylbenzylaminoalkyle protonés présentant un pH de 2 à 3,5,
- la composition présentant une teneur en alcool, en particulier une teneur en méthanol, <1,0% en poids et une stabilité supérieure à 6 mois à température ambiante, la température ambiante comprenant une plage de 20 à 23°C.

**11.** Procédé selon la revendication 10, **caractérisé en ce que** l'étape respective

- d'ajout d'eau comprend l'ajout d'une quantité définie d'eau, en particulier d'eau distillée, et
- de séparation de l'alcool et de l'alcool d'hydrolyse comprend une élimination par distillation de l'alcool et de l'alcool d'hydrolyse, de préférence sous vide à une température du fond inférieure à 60°C et
- d'obtention d'une composition aqueuse comprenant des siloxanols à fonctionnalité N-vinylbenzylaminoalkyle et éventuellement des sels des siloxanols à fonctionnalité vinylbenzylaminoalkyle protonés comprend une composition comprenant
- 1 à 70% en poids de siloxanols à fonctionnalité N-vinylbenzylaminoalkyle et/ou de sels des siloxanols à fonctionnalité N-vinylbenzylaminoalkyle protonés et 30 à 99% en poids d'eau par rapport à la composition totale de 100% en poids.

**12.** Procédé selon la revendication 10 ou 11, **caractérisé en ce que** la composition aqueuse présente une teneur en

    i) alcool libre dans la composition totale égale ou inférieure à 0,5% en poids dans la composition totale et
    ii) éventuellement en groupes alcoxy hydrolysables inférieure à 5% en poids dans la composition totale.

**13.** Procédé selon la revendication 10 ou 11, **caractérisé en ce qu'**on dispose au préalable au moins un alcoxysilane à fonctionnalité aminoalkyle ou un mélange d'alcoxysilanes à fonctionnalité aminoalkyle sous forme de composition alcoolique présentant un rapport pondéral d'alcoxysilane à fonctionnalité amino à alcool, en particulier l'éthanol ou le méthanol, de 80:20 à 30:70.

**14.** Utilisation d'une composition selon l'une des revendications 1 à 9 ou d'un produit de procédé selon l'une des revendications 10 à 13 en tant que promoteur d'adhérence destiné à être utilisé sur des substrats inorganiques et organiques, promoteur d'adhérence entre des surfaces inorganiques et organiques, pour le revêtement de particules inorganiques en vue d'une réticulation avec des monomères lors de la préparation de polymères chargés de particules inorganiques, lors du renforcement de polymères organiques par des charges inorganiques, lors du revêtement de surfaces inorganiques ou de polymères organiques ainsi que dans des polymères renforcés par des fibres en tant que promoteur d'adhérence entre des fibres inorganiques et des polymères organiques.

**IN DER BESCHREIBUNG AUFGEFÜHRTE DOKUMENTE**

**In der Beschreibung aufgeführte Patentdokumente**

- US 4902556 A
- EP 353766 A
- US 4849294 A
- EP 338128 A
- US 4499152 A
- US 4382991 A
- US 4330444 A
- DE 2802242
- JP 1259369 A
- EP 176062 A
- EP 590270 A
- WO 2005118599 A

**In der Beschreibung aufgeführte Nicht-Patentliteratur**

- **ANDRE STRIEGEL et al.** Modern Size-Exclusion Liquid Chromatography. Verlag Wiley & Sons, 2009